# EUROPEAN PATENT SPECIFICATION

(11) **EP 4 327 305 B1**
(45) Date of publication and mention of the grant of the patent: **11.03.2026**
(21) Application number: 22720740.4
(22) Date of filing: 20.04.2022
(51) Int. Cl.: G07C 9/00

(54) **REQUESTING AND CONTROLLING ACCESS TO WASTE COLLECTION POINTS**
ANFORDERUNG UND STEUERUNG DES ZUGANGS ZU ABFALLSAMMELPUNKTEN
DEMANDE ET COMMANDE D'ACCÈS À DES POINTS DE COLLECTE DE DÉCHETS

(30) Priority: 21.04.2021 FI 20215466
(43) Date of publication of application: 28.02.2024
(73) Proprietor: Maricap Oy, 01450 Vantaa (FI)
(72) Inventor: SUNDHOLM, Göran, 04310 Tuusula (FI); LINDSTRÖM, Juha, 01300 Vantaa (FI); EKBLAD, Jari, 02730 Espoo (FI)
(74) Representative: Papula Oy
(86) International application number: PCT/FI2022/050256
(87) International publication number: WO 2022/223879

(56) References cited:
- EP-A1- 3 522 122
- EP-A1- 3 567 555
- EP-A1- 3 905 632
- WO-A1-2020/152396
- CN-A- 112 265 759

## Description

### TECHNICAL FIELD

The present disclosure relates generally to the field of waste collection, and particularly to techniques for requesting and controlling access to waste collection points by using a mobile user device.

### BACKGROUND

Pneumatic waste conveying systems are characterized by that wastes (e.g., household wastes) are conveyed therein through pipelines by means of air suction (or, in other words, by creating a pressure difference in the pipelines). This allows the wastes to be conveyed over long distances through the pipelines. Such systems are currently being used in different facilities, such as multi-dwelling units, shopping malls, etc.

A pneumatic waste conveying system typically comprises a number of waste collection points (also referred to as feed-in stations in the art), each of which comprises a plurality of input containers (also referred to as inlets or input points in the art). Each of the plurality of input containers may be connected to a system of pipelines. By opening and closing a shut-off means (e.g. a valve means) or by adjusting the intake of make-up air (also referred as replacement air) with a make-up air shut-off means and performing suction from a partial vacuum generator of the waste conveying system, it is possible to feed the wastes from the corresponding input container(s) to the system of pipelines, thereby emptying the input container(s). The system of pipelines may connect the waste collection points to a destination point, for example, a waste treatment station or plant where the wastes may be treated (e.g., recycled, if possible).

To receive the wastes, the input containers are provided with hatches. Today, the hatches of the input containers of the waste collection point are opened either mechanically by hand, or at the push of a button, or by using Radio Frequency Identification (RFID). Of these, only the RFID allows one to perform the touchless opening of the hatches. However, the RFID does not provide efficient access management for the waste collection point. Examples of waste collection points can be seen in EP 3522122 A1, CN 112265759 A, WO 2020152396 A1, or EP 3567555 A1.

### SUMMARY

This summary is provided to introduce a selection of concepts in a simplified form that are further described below in the detailed description.

It is an objective of the present disclosure to provide a technical solution that allows an authorized user to gain access to a waste collection point by using his/her mobile user device. The objective above is achieved by the features of the independent claims in the appended claims. Further embodiments and examples are apparent from the dependent claims, the detailed description and the accompanying drawings.

According to a first aspect, a mobile user device for requesting access to a waste collection point according to claim 1 is provided.

The mobile user device according to the first aspect allows the hatch(es) of the waste container(s) to be unlocked or opened only for an authorized user, thereby providing efficient access management for the waste collection point.

In one embodiment of the first aspect, the indication of the at least one waste container to be accessed comprises at least one type of waste or at least one ID of the at least one waste container to be accessed. By using such an indication in the user input, it is possible to grant access only to one or more waste containers storing one or more desired types of waste, thereby increasing the efficiency of access management for the waste collection point.

In the first aspect, the mobile user device further comprises a touch screen having buttons provided thereon. The processing unit is configured to perform operation (a) via the buttons of the touch screen. This may allow operation (a) to be performed more easily and efficiently.

In one non-claimed alternative of the first aspect, the mobile user device further comprises a camera. In this alternative, the processing unit is configured to perform operation (a) by causing the camera to read a Quick Response (QR) code. This may allow operation (a) to be performed more easily and efficiently.

In one more non-claimed alternative of the first aspect, the mobile user device further comprises a short-range wireless communication unit. In this alternative, the processing unit is configured to perform operation (a) by causing the short-range wireless communication unit to read a Near Field Communication (NFC) tag. This may allow operation (a) to be performed more easily and efficiently.

In one embodiment of the first aspect, the processing unit is further configured to perform operation (b) by using at least one of Global Positioning System (GPS) signals, short-range wireless signals broadcasted by a beacon (e.g., a Bluetooth Low Energy (BLE) beacon) of the waste collection point, a QR code provided in the waste collection point, and an NFC tag provided in the waste collection point. This provides a variety of detection ways, thereby making the mobile user device according to the first aspect more flexible in use.

In one embodiment of the first aspect, the processing unit is configured to perform operation (c) by using short-range wireless communications (e.g., BLE) and/or over Internet. This may make the mobile user device according to the first aspect more flexible in use.

In one embodiment of the first aspect, the processing unit is further configured, before operation (c), to encrypt the at least one access request with a cryptographic protocol (e.g., e.g. Advanced Encryption Standard (AES) or Transport Layer Security (TLS) protocols to prevent eavesdropping and replay attacks). This may ensure secured access to the waste container(s) of the waste collection point.

In one embodiment of the first aspect, the processing unit is further configured to receive statistics from the access control system and output the statistics to a user of the mobile user device. The statistics may be based on a number of times the access to the at least one waste container of the waste collection point has been requested by the mobile user device for a predefined period of time. The statistics provides feedback to the user of the mobile user device, so that the user may have an idea about how he/she uses the waste collection point (e.g., whether a rest waste container (i.e. a mixed waste container) is used frequently or not; if yes, the user may focus more on sorting out rest waste to reduce its fraction in the whole amount of wastes placed by the user in the waste collection point for the predefining period of time).

In one embodiment of the first aspect, each of the waste containers of the waste collection point comprises a sensor for sensing a presence of infeed waste in the at least one waste container. In this embodiment, the statistics received by the processing unit of the mobile user device is additionally based on sensing signals from the sensor of each of the waste containers of the waste collection point. By using the sensing signals, it is possible to obtain more accurate statistical data about the usage of the waste collection point.

According to a second aspect, a method for requesting access to a waste collection point according to claim 8 is provided.

By using the method according to the second aspect, it is possible to unlock or open the hatch(es) of the waste container(s) only for an authorized user, thereby providing efficient access management for the waste collection point.

In one embodiment of the second aspect, the indication of the at least one waste container to be accessed comprises at least one type of waste or at least one ID of the at least one waste container to be accessed. By using such an indication in the user input, it is possible to grant access only to one or more waste containers storing one or more desired types of waste, thereby increasing the efficiency of access management for the waste collection point.

In the second aspect, the mobile user device further comprises a touch screen having buttons provided thereon. Step (a) is performed by pressing the buttons of the touch screen. This may allow step (a) to be performed more easily and efficiently.

In one non-claimed alternative of the second aspect, the mobile user device further comprises a camera. In this alternative, step (a) is performed by causing the camera to read a QR code. This may allow step (a) to be performed more easily and efficiently.

In one more non-claimed alternative of the second aspect, the mobile user device further comprises a short-range wireless communication unit. In this alternative, step (a) is performed by causing the short-range wireless communication unit to read an NFC tag. This may allow step (a) to be performed more easily and efficiently.

In one embodiment of the second aspect, step (b) is performed by using at least one of GPS signals, short-range wireless signals broadcasted by a beacon (e.g., a BLE beacon) of the waste collection point, a QR code provided in the waste collection point, and an NFC tag provided in the waste collection point. This provides a variety of detection ways, thereby making the method according the second aspect more flexible in use.

In one embodiment of the second aspect, step (c) is performed by using short-range wireless communications (e.g., BLE) and/or over Internet. This may make the method according to the second aspect more flexible in use.

In one embodiment of the second aspect, the method further comprises, before step (c), the step of encrypting the at least one access request with a cryptographic protocol (e.g., e.g. AES or TLS protocols to prevent eavesdropping and replay attacks). This may ensure secured access to the waste container(s) of the waste collection point.

In one embodiment of the second aspect, the method further comprises the steps of receiving, in the mobile user device, statistics from the access control system and outputting the statistics to a user of the mobile user device. The statistics may be based on a number of times the access to the at least one waste container of the waste collection point has been requested by the mobile user device for a predefined period of time. The statistics provides a feedback to the user of the mobile user device, so that the user may have an idea about how he/she uses the waste collection point (e.g., whether a rest waste container (i.e. a mixed waste container) is used frequently or not; if yes, the user may focus more on sorting out rest waste to reduce its fraction in the whole amount of wastes placed by the user in the waste collection point for the predefined period of time).

In one embodiment of the second aspect, each of the waste containers of the waste collection point comprises a sensor for sensing a presence of infeed waste in the waste containers.

In this embodiment, the statistics received by the mobile user device is additionally based on sensing signals from the sensor of each of the at least one waste container of the waste collection point. By using the sensing signals, it is possible to obtain more accurate statistical data about the usage of the waste collection point. According to a third aspect, a combination of a mobile user device according to the first aspect and an access control system for controlling access to a waste collection point according to claim 15 is provided.

The combination according to the third aspect allows the hatch(es) of the waste container(s) to be unlocked or opened only for an authorized user, thereby providing efficient access management for the waste collection point.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows a block diagram of a pneumatic waste conveying system in accordance with one exemplary embodiment;
FIG. 2 shows a block diagram of a mobile user device for requesting access to a waste collection point in accordance with one exemplary embodiment;
FIG. 3 shows a flowchart of a method for requesting access to a waste collection point in accordance with one exemplary embodiment;
FIG. 4 schematically explains how a user of the mobile user device shown in FIG. 2 may indicate one or more types of waste to be placed in one or more waste containers of a waste collection point of interest;
FIG. 5 shows a block diagram of an access control system for controlling access to a waste collection point in accordance with one exemplary embodiment; and
FIG. 6 shows a flowchart of a method for controlling access to a waste collection point in accordance with one exemplary embodiment.

### DETAILED DESCRIPTION

Various embodiments of the present disclosure are further described in more detail with reference to the accompanying drawings.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the devices, systems, and/or methods disclosed herein may be implemented in practice using any numbers of the embodiments provided herein. Furthermore, it should be understood that any embodiment of the present disclosure may be implemented using one or more of the elements presented in the appended claims.

The word "exemplary" is used herein in the meaning of "used as an illustration". Unless otherwise stated, any embodiment described herein as "exemplary" should not be construed as preferred or having an advantage over other embodiments.

As noted earlier, a user (e.g., a tenant, resident, etc.) may currently open hatches of waste containers in a desired waste collection point either mechanically by hand, or at the push of an activation button provided on each of the waste containers, or by using a RFID technology. Of these, the RFID technology is of particular interest, since it allows the user to open the hatches without having to touch them (i.e. it is enough to show or apply a RFID tag to a RFID reader installed in the waste collection point). However, the RFID technology does not provide efficient access management for the waste collection point. Furthermore, the user should always have a separate RFID tag at hand to gain access to the waste collection point.

The exemplary embodiments disclosed herein provide a technical solution that allows mitigating or even eliminating the above-sounded drawbacks peculiar to the prior art. In particular, the technical solution disclosed herein involves using a mobile user device to gain access to a desired waste collection point. The mobile user device is initially provided with a user ID that is granted permanent or temporary access rights to one or more hatches connected to the waste containers of the waste collection point. By using the user ID and a user input that comprises an indication of one or more of the waste containers to be accessed in the waste collection point at a given time instant, the mobile user device sends an access request to an access control system. In response to the access request, the control access system unlocks or opens the hatch(es) of the waste container(s) to be accessed when the mobile user device is in the vicinity of the waste collection point. By so doing, it is possible to provide efficient access management for the waste collection point.

As used in the embodiments disclosed herein, the mobile user device may refer to a mobile terminal, a mobile phone, a cellular phone, a smart phone, a cordless phone, a personal digital assistant (PDA), a wireless communication device, a laptop computer, a tablet computer, a netbook, a smartbook, an ultrabook, a wearable device (e.g., a smart watch, a smart wrist band, etc.), an entertainment device (e.g., a video player, etc.), a vehicular component or sensor, an unmanned vehicle (e.g., an industrial robot, a quadcopter, etc.), industrial manufacturing equipment, a global positioning system (GPS) device, an Internet-of-Things (IoT) device, an Industrial loT (IIoT) device, a machine-type communication (MTC) device, a group of Massive loT (MloT) or Massive MTC (mMTC) devices/sensors, or any other suitable mobile device configured to support wireless communications. In some embodiments, the mobile user device may refer to at least two collocated and interconnected mobile user devices thus defined.

In some embodiments, the waste collection point may be implemented as a fully automated waste collection point or feed-in station in which hatches of waste containers may be unlocked and opened automatically in response to the access request from the mobile user device. To perform this automatic opening, the waste collection point should comprise hatch actuators, such, for example, as an electric actuator, a pneumatic actuator, etc. The type of the hatch actuator depends on particular applications (e.g., installation sites), as should be obvious to those skilled in the art.

In some other embodiments, the waste collection point may be implemented as a semi-automated waste collection point or feed-in station in which hatches of waste containers may be unlocked but not opened in response to the access request from the mobile user device. Once the hatches of the waste containers are unlocked, a user can open the hatches manually or by pressing one or more corresponding push buttons provided in the waste collection point.

Furthermore, the waste collection point may be provided with a single hatch providing access to one or more waste containers in the waste collection point. In one embodiment, the waste collection point may comprise a waste handling means configured to sort out waste placed inside via the single hatch such that different types of waste are directed to the corresponding waste containers. In another embodiment, the waste collection point may be configured to receive, via the single hatch, different wastes at different times (i.e. there may be special mechanisms in the waste collection point which would provide a corresponding route for a certain type of waste to one of the waste containers within a predefined period of time).

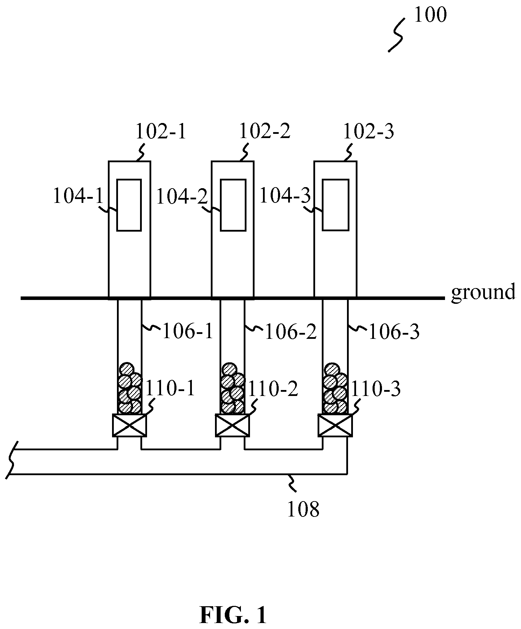

FIG. 1 shows a block diagram of a pneumatic waste conveying system 100 in accordance with one exemplary embodiment. For simplicity, the system 100 is shown as comprising one waste collection point comprising three (input or feed-in) waste containers 102-1, 102-2, 102-3 which may be installed on a ground surface. Each of the waste containers 102-1, 102-2, 102-3 is intended for storing a different type of waste (schematically shown as shaded circles in FIG. 1), such, for example, as solid household wastes, industry wastes, or recyclable wastes. The waste containers 102-1, 102-2, 102-3 may be properly marked (e.g., with different symbols, letters, and/or digits) such that a user can easily determine which of the waste containers 102-1, 102-2, 102-3 should be used for a certain type of waste. The waste containers 102-1, 102-2, 102-3 are provided with hatches 104-1, 104-2, 104-3, respectively. Alternatively, there may be a single hatch providing access to the waste containers 102-1, 102-2, 102-3, as discussed above. The system 100 also comprises three branch pipelines 106-1, 106-2, 106-3 connected to the waste containers 102-1, 102-2, 102-3, respectively, and a main pipeline 108 connected to the branch pipelines 106-1, 106-2, 106-3 via valves 110-1, 110-2, 110-3, respectively. The branch pipelines 106-1, 106-2, 106-3 and the main pipeline 108 may be arranged underneath the ground. The valves 110-1, 110-2, 110-3 are initially closed, so that the wastes from the waste container 102-1 are fed to the branch pipeline 106-1, the wastes from the waste container 102-2 are fed to the branch pipeline 106-2, and the wastes from the waste container 102-3 are fed to the branch pipeline 106-3. When it is determined that one or more of the branch pipelines 106-1, 106-2, 106-3 should be emptied, at least a partial vacuum is provided in the main pipeline 108 by using a suction unit (not shown), whereupon corresponding one or more of the valves 110-1, 110-2, 110-3 are opened and the wastes are conveyed through the main pipeline 108 to a destination point (e.g., a waste treatment plant or station, or an output or end waste container for a certain type of waste).

In one embodiment, the system 100 may be implemented without the valves 110-1, 110-2, 110-3, and the intake of make-up air (also referred to as replacement air) may be controlled by make-up air valves. When it is determined that one or more of the branch pipelines 106-1, 106-2, 106-3 should be emptied, at least a partial vacuum is provided in the main pipeline 108 by using the suction unit, whereupon corresponding one or more of the make-up air valves are opened and the wastes are conveyed through the main pipeline 108 to a destination point (e.g., a waste treatment plant or station, or an output or end waste container for a certain type of waste).

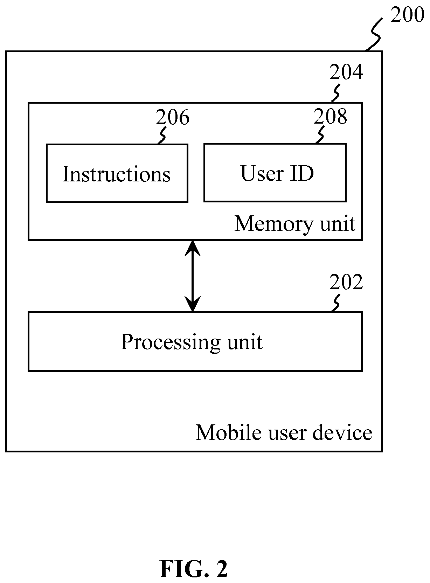

FIG. 2 shows a block diagram of a mobile user device 200 for requesting access to a waste collection point in accordance with one exemplary embodiment. The waste collection point may be fully automated or semi-automated, as discussed above. As shown in FIG. 2, the mobile user device 300 comprises a processing unit 202 and a memory unit 204. The memory unit 204 stores processor-executable instructions 206 and a user ID 208. The user ID 208 is associated with or provides permanent or temporary access rights to one or more hatches connected to one or more waste containers of the waste collection point. Being executed by the processing unit 202, the processor-executable instructions 206 cause the processing unit 202 to operate in a manner that will be described below in more detail. It should be noted that the number, arrangement and interconnection of the constructive elements constituting the mobile user device 200, which are shown in FIG. 2, are not intended to be any limitation of the present disclosure, but merely used to provide a general idea of how the constructive elements may be implemented within the mobile user device 200. For example, the processing unit 202 may be replaced with several processing units having different functionalities, as well as the memory unit 204 may be replaced with several removable and/or fixed storage devices, depending on particular applications. Furthermore, in some embodiments, the mobile user device 200 may further comprise different input and output means, such, for example, as a camera, a touch screen, an NFC reader, etc.

It is assumed that the processing unit 202 includes different subunits required to request access to the waste collection point. In particular, the processing unit 202 may comprise a transceiving subunit (not shown) capable of performing different operations required to perform the data reception and transmission, such, for example, as signal modulation/demodulation, encoding/decoding, etc. In general, the processing unit 302 may comprise one or more of the following: a CPU, general-purpose processor, single-purpose processor, microcontroller, microprocessor, application specific integrated circuit (ASIC), field programmable gate array (FPGA), digital signal processor (DSP), complex programmable logic device, etc.

The memory unit 204 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 206 stored in the memory unit 204 may be configured as a computer-executable code which causes the processing unit 202 to perform the aspects of the present disclosure. The computer-executable code for carrying out operations or steps for the aspects of the present disclosure may be written in any combination of one or more programming languages, such as Java, C++, or the like. In some examples, the computer-executable code may be in the form of a high-level language or in a pre-compiled form and be generated by an interpreter (also pre-stored in the memory unit 204) on the fly.

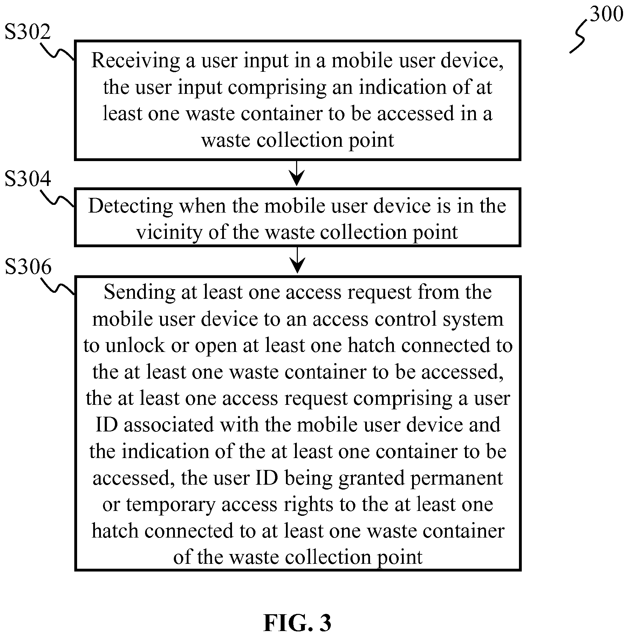

FIG. 3 shows a flowchart of a method 300 for requesting access to a waste collection point in accordance with one exemplary embodiment. In general, the method 300 describes the operation of the mobile user device 200. The method 300 starts with a step S302, in which the processing unit 202 receives a user input from the user of the mobile user device 200. The user input comprises an indication of one or more waste containers to be accessed in the waste collection point. In a preferred embodiment, the waste collection point is implemented as part of a pneumatic waste conveying system like the system 100. However, this should not be construed as any limitation of the present disclosure - in some other embodiments, the waste collection point may be implemented as a stand-alone waste collection point the waste containers of which may be emptied, for example, manually. Then, the method 300 proceeds to a step S304, in which the processing unit 202 detects when the mobile user device 200 is in the vicinity of the waste collection point. After that, the method 300 goes on to a step S306, in which the processing unit 202 sends one or more access requests to an access control system (which will be discussed later in more detail) to unlock or open the hatch(es) connected to the waste container(s) to be accessed or, in other words, indicated in the user input (e.g., one or more of the hatches 104-1, 104-2, 104-3). Such an access request may be sent by the transceiving subunit of the processing unit 202, and comprises the user ID 208 and the indication of the waste container(s) to be accessed. By using the method 300, it is possible to unlock or open the hatch(es) of the waste container(s) only for authorized users, thereby providing efficient access management for the waste collection point.

It should be noted that the mobile user device 200 (or, in other words, the user of the mobile user device 200) may be given the user ID 208 in response to registering the user in the access control system. Once the user is registered, the user ID may be transferred to the mobile user device 200, e.g., a mobile phone, via a QR code, Near-Field Communications (NFC), Bluetooth (e.g., BLE), Short Message Service (SMS), email or typed manually. For example, the user may install special software (e.g., a mobile application) on the mobile user device 200, and the user ID 208 may be sent from the access control system to the mobile user device 200 in response to such an installation.

In one embodiment, the indication of the waste container(s) to be accessed may comprise one or more types of waste or one or more IDs of the waste container(s) to be accessed. Such an indication in the user input makes it possible to grant access only to one or more waste containers storing one or more desired types of waste, thereby increasing the efficiency of access management for the waste collection point.

The mobile user device 200 further comprises a touch screen having buttons provided thereon, and the step S302 of the method 300 may be performed in response to the user pressing the buttons of the touch screen. In a non-claimed alternative, the mobile user device 200 may further comprise a camera, and the step S302 of the method 300 may be performed by causing the camera to read a QR code. In one more non-claimed alternative, the mobile user device 200 may further comprise a short-range wireless communication unit, and the step S302 of the method 300 may be performed by causing the short-range wireless communication unit to read an NFC tag. Each of these alternatives may allow the step S302 to be performed more easily and efficiently.

In one embodiment, the step S304 of the method 300 may be performed by the processing unit 202 by using GPS signals (e.g., received via the transceiving subunit). In one other embodiment, the step S304 of the method 300 may be performed by the processing unit 202 by using short-range wireless signals broadcasted by a beacon (e.g, a BLE beacon) arranged in the waste collection point. In one more other embodiment, the step S304 of the method 300 may be performed by the processing unit 202 by using a QR code or an NFC tag provided in the waste collection point. It should be also noted that the step S304 of the method 300 may be performed by using any combination of these embodiments, i.e., for example, by using the GPS signals and the QR code, or by using the GPS signals and the NFC tag, and so on.

In one embodiment, the step S306 of the method 300 may be performed by the processing unit 202 by using short-range wireless communications, Internet, or the combination of both. In case of the short-wireless communication network, both the processing unit 202 and the waste collection point may be equipped with proper wireless communication subunits configured to support the short-range wireless communications (e.g., Bluetooth). By using the combination of the short-range wireless communication network and Internet, the user may request the opening or unlocking of the hatch(es) of the desired waste container(s) in the waste collection point from home via Internet, and the opening or unlocking itself will take place only when the mobile user device 200 in the vicinity of the waste collection point by using the short-range wireless communications or over the Internet (if the position of the mobile user device 200 is determined with the GPS signals).

In one embodiment, the method 300 may comprise, before the step S306, an additional step, according to which the processing unit 202 encrypts the access request(s) with a cryptographic protocol (e.g., e.g. AES or TLS protocols). This allows one to prevent eavesdropping and replay attacks.

In one embodiment, the method 300 may comprise additional steps, in which the processing unit 202 receives statistics from the access control system and outputs the statistics to a user of the mobile user device 200 (e.g., on the touch screen or via any other user interface). The statistics may be based on a number of times the access to the waste container(s) of the waste collection point has been requested by the mobile user device 200 for a predefined period of time (e.g., one year, month, week, etc.). The statistics provides a feedback to the user of the mobile user device 200, so that the user may have an idea about how he/she uses the waste collection point (e.g., whether a rest waste container (i.e. a mixed waste container) is used frequently or not; if yes, the user may focus more on sorting out rest waste to reduce its fraction in the whole amount of wastes placed by the user in the waste collection point for the predefined period of time). To make the statistics more accurate, each of the waste container(s) of the waste collection point may comprises a sensor for sensing a presence of infeed waste in the waste container, and the statistics may be additionally based on sensing signals from the sensor(s) of the waste container(s) of the waste collection point.

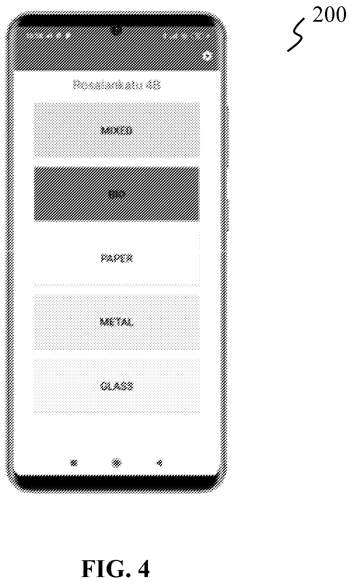

FIG. 4 schematically explains how the user of the mobile user device 200 may indicate the type(s) of waste to be placed in the container(s) of a waste collection point of interest. In this case, the mobile user device 200 is implemented as a smartphone that is configured to display, on its touch screen, a set of buttons corresponding to different types of waste or, in other words, waste containers which are available in the waste collection point of interest. More specifically, there are waste containers for rest wastes (i.e. mixed wastes), biowastes, paper, metal, and glass in the waste collection point of interest. The user may indicate one or more required types of waste by pressing the corresponding button(s). As also shown in FIG. 4, the smartphone additionally displays the address of the waste collection point of interest, i.e. "Rosalankatu 4B". This address may be used as the ID of the waste collection point of interest or the waste containers arranged in the waste collection point. Correspondingly, the access control system should check whether the access rights provided by the user ID apply to the address of the waste collection point of interest. Thus, the user of the mobile user device 200 may be given access to some but not all waste collection points of a certain operator or waste service company, thereby providing more efficient and flexible access management for different waste collection points.

In one embodiment, the mobile user device 200 may belong to a guest user rather than a resident or tenant of a certain building. Although the guest user does not have permanent access rights to the waste container(s) of a waste collection point arranged near the building, he/she may request the resident or tenant having such access rights to give him/her a temporary permit (or temporary rights) to use the waste collection point. This may be done, for example, by installing, on the guest's mobile device, the same special software (e.g., mobile application) as the one used by the resident or tenant to gain access to the waste collection point. The resident may, for example, give such a temporary permit via a QR code generated in his/her own mobile application. As an example, the temporary permit may be as follows: "For the next hour for biowaste and cardboard in waste collection point Rosalankatu 4B". Thus, the guest user may use the waste collection point with the user ID of the resident or tenant, and the usage of the waste collection point by the guest user will be accumulated as the usage statistics of the user ID of the resident or tenant.

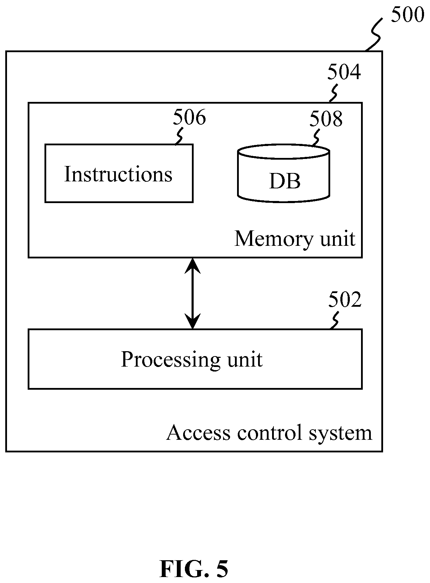

FIG. 5 shows a block diagram of an access control system 500 for controlling access to a waste collection point in accordance with one exemplary embodiment. The system 500 may be used by the mobile user device 200 to gain access to the waste collection point. As shown in FIG. 5, the system 500 comprises a processing unit 502 and a memory unit 504. The memory unit 504 stores processor-executable instructions 506 which, when executed by the processing unit 502, cause the processing unit 502 to operate in a manner that will be described below in more detail. The memory unit 504 further stores a database (DB) 508 of user IDs which have been granted permanent or temporary access rights to one or more waste collection points (i.e. one or more hatches of waste container(s) arranged in the waste collection point(s)). It should be noted that the number, arrangement and interconnection of the constructive elements constituting the system 500, which are shown in FIG. 5, are not intended to be any limitation of the present disclosure, but merely used to provide a general idea of how the constructive elements may be implemented within the system 500. For example, the processing unit 502 may be replaced with several processing units having different functionalities, as well as the memory unit 504 may be replaced with several removable and/or fixed storage devices, depending on particular applications.

It should be noted that the processing unit 502, the memory unit 504, and the processor-executable instructions 506 may be implemented in the same or similar manner as the above-discussed processing unit 202, the memory unit 204, and the processor-executable instructions 206, respectively.

As for the DB 508, it may be configured as a data container where each user ID is associated with the permanent or temporary access rights to the hatch(es) of the waste container(s) of a certain waste collection point. The DB 508 may be configured as a Structured Query Language (SQL) database, a graph database, etc., depending on particular applications, as should be apparent to those skilled in the art Correspondingly, the processor 504 may be configured to query and maintain the DB 508 by using any suitable programming language, depending on the type of the DB 508 (e.g., SQL in case of the SQL database).

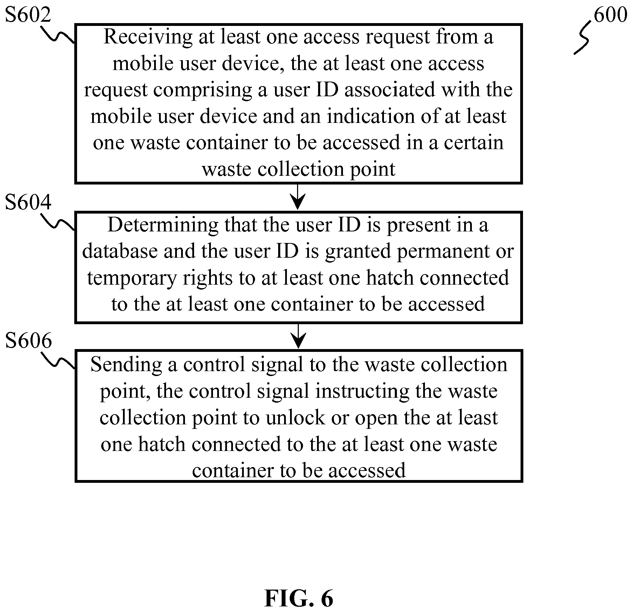

FIG. 6 shows a flowchart of a method 600 for controlling access to a waste collection point in accordance with one exemplary embodiment. In general, the method 600 describes the operation of the system 500. The method 600 starts with a step S602, in which the processing unit 502 receives at least one access request from the mobile user device 200. Each access request comprises the user ID 208 associated with the mobile user device 200 and the indication of one or more waste containers to be accessed in the waste collection point (where the user of the mobile user device 200 wants to leave his/her bags of wastes). Then, the method 600 proceeds to a step S604, in which the processing unit 504 determines that the user ID 208 is present in the DB 508 and the user ID 208 is granted the permanent or temporary access rights to the hatch(es) of the waste container(s) to be accessed. After that, the method 600 goes on to a step S606, in which the processing unit 502 sends a control signal to the waste collection point. The control signal instructs the waste collection point to unlock or open the hatch(es) of the waste container(s) to be accessed.

In one embodiment, the method 600 comprises an additional step, in the which the processor unit 502 counts a number of times the user ID 208 has been used to unlock or open the hatch of each waste container in the waste collection point for a predefined period of time. This number of times may be used to obtain various statistics about the types of wastes collected in the waste containers by using the user ID 208. For example, there may be a goal for the quantity of a particular type of waste (e.g., the quantity of rest waste should be under 50% of the total quantity of all wastes placed by the user in the waste containers at the waste collection point for a certain period of time), and the user may achieve this goal by analyzing such statistics. Furthermore, the number of times the user ID 208 has been used for the predefined period of time may be used to calculate an average weight and/or volume of waste collected in each waste container. The average weight and/or volume of waste in each waste container may be also used to obtain various statistics about the types of wastes collected in the waste containers by using the user ID 208.

As noted earlier, each of the waste containers of the waste collection point may comprise the sensor for sensing the presence of infeed waste in the waste container. In this case, the processing unit 502 may receive the sensing signal from the sensor of each of the waste containers whenever the waste is fed into the waste container, and calculate the average weight and/or volume of waste collected in each of the waste containers based on the sensing signals (i.e. their numbers). The sensing signals may be used as an alternative or addition to the above-discussed number of times.

In one embodiment, if there is a rest waste container among the waste containers of the waste collection point, the method 600 comprises an additional step, in which the processing unit 502 compares the counted number of the user ID 208 has been used to unlock or open the hatch of the rest waste container (or the average weight or volume of waste collected in the rest waste container by using the user ID 208) to a threshold value. If the counted number of times the user ID 208 has been used to unlock or open the hatch of the rest waste container (or the average weight or volume of waste collected in the rest waste container by using the user ID 208) is above than the threshold value, the processing unit 502 may send a first feedback signal to the mobile user device 200 (i.e. the processing unit 202). If the counted number of times the user ID 208 has been used to unlock or open the hatch of the rest waste container (or the average weight or volume of waste collected in the rest waste container by using the user ID 208) is less than or equal to the threshold value, the processing unit 502 may send a second feedback signal to the mobile user device 200 (i.e. the processing unit 202). The second feedback signal is different from the first feedback signal. The first and second feedback signals may be outputted in the mobile user device 200 in a variety of ways. For example, they may be converted to different color signals or audio signals. Furthermore, the processing unit 202 may output both the first and second feedback signals when the mobile user device 200 is at a predefined distance from the waste collection point (e.g., when the mobile user device 200 leaves the coverage area of BLE beacons installed in the waste collection point). By using the first and second feedback signals, the user may understand when he/she needs to focus more on waste sorting, so that the quantity of rest waste is reduced.

It should be noted that each step or operation of the methods 300 and 500, or any combinations of the steps or operations, can be implemented by various means, such as hardware, firmware, and/or software. As an example, one or more of the steps or operations described above can be embodied by processor-executable instructions, data structures, program modules, and other suitable data representations. Furthermore, the processor-executable instructions which embody the steps or operations described above can be stored on a corresponding data carrier and executed by the processing unit 202 or the processing unit 502. This data carrier can be implemented as any computer-readable storage medium configured to be readable by the processing unit 202 or the processing unit 502 to execute the processor-executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present disclosure are described herein, it should be noted that any various changes and modifications could be made in the embodiments of the present disclosure, provided those changes and modifications do not depart from the scope of legal protection which is defined by the appended claims. In the appended claims, the word "comprising" does not exclude other elements, steps or operations, and the indefinite article "a" or "an" does not exclude a plurality.

## Claims

1. A mobile user device for requesting access to a waste collection point, wherein the waste collection point comprises waste containers and hatches connected to the waste containers, and wherein the mobile user device comprises:
a memory unit storing processor-executable instructions and a user identifier (ID), the user ID being granted permanent or temporary access rights to the hatches connected to the containers of the waste collection point;
a processing unit coupled to the memory unit; and
a touch screen having a set of buttons provided thereon, wherein the set of buttons corresponds to different types of waste,
wherein the processing unit is configured, when executing the processor-executable instructions, to:
(a) receive a user input via the buttons of the touch screen corresponding to different types of waste, the user input comprising an indication of at least one waste container to be accessed among the waste containers of the waste collection point;
(b) detect when the mobile user device is in a vicinity of the waste collection point; and
(c) send at least one access request to an access control system to unlock or open the at least one hatch connected to the at least one waste container to be accessed, the at least one access request comprising the user ID and the indication of the at least one waste container to be accessed.

2. The mobile user device of claim 1, wherein the indication of the at least one waste container to be accessed comprises:
- at least one type of waste, or
- at least one ID of the at least one waste container to be accessed.

3. The mobile user device of any one of claims 1 to 2, wherein the processing unit is configured to perform operation (b) by using at least one of:
- Global Positioning System (GPS) signals;
- short-range wireless signals broadcasted by a beacon of the waste collection point;
- a QR code provided in the waste collection point; and
- an NFC tag provided in the waste collection point.

4. The mobile user device of any one of claims 1 to 3, wherein the processing unit is configured to perform operation (c) by using short-range wireless communications and/or over Internet.

5. The mobile user device of any one of claims 1 to 4, wherein the processing unit is further configured, before operation (c), to encrypt the at least one access request with a cryptographic protocol.

6. The mobile user device of any one of claims 1 to 5, wherein the processing unit is further configured to receive statistics from the access control system and output the statistics to a user of the mobile user device, the statistics being based on a number of times the access to the at least one waste container of the waste collection point has been requested by the mobile user device for a predefined period of time.

7. The mobile user device of claim 6, wherein, if each of the waste containers of the waste collection point comprises a sensor for sensing a presence of infeed waste in the waste containers, the statistics is additionally based on sensing signals from the sensor of each of the waste containers of the waste collection point.

8. A method for requesting access to a waste collection point, wherein the waste collection point comprises waste containers and hatches connected to the waste containers, and wherein the method comprises:
(a) receiving a user input by pressing buttons of a touch screen corresponding to different types of waste in a mobile user device, wherein the mobile user device comprises the touch screen having a set of buttons provided thereon, wherein the set of buttons corresponds to different types of waste, the user input comprising an indication of at least one waste container to be accessed among the waste containers of the waste collection point;
(b) detecting when the mobile user device is in a vicinity of the waste collection point; and
(c) sending at least one access request from the mobile user device to an access control system to unlock or open the at least one hatch connected to the at least one waste container to be accessed, the at least one access request comprising a user ID associated with the mobile user device and the indication of the at least one container to be accessed, the user ID being granted permanent or temporary access rights to the at least one hatch connected to the at least one waste container of the waste collection point.

9. The method of claim 8, wherein the indication of the at least one waste container to be accessed comprises:
- at least one type of waste, or
- at least one ID of the at least one waste container to be accessed.

10. The method of any one of claims 8 to 9, wherein step (b) is performed by using at least one of:
- Global Positioning System (GPS) signals;
- short-range wireless signals broadcasted by a beacon of the waste collection point;
- a QR code provided in the waste collection point; and
- an NFC tag provided in the waste collection point.

11. The method of any one of claims 8 to 10, wherein step (c) is performed by using short-range wireless communications and/or over Internet.

12. The method of any one of claims 8 to 11, further comprising, before step (c), encrypting the at least one access request with a cryptographic protocol.

13. The method of any one of claims 8 to 12, further comprises receiving, in the mobile user device, statistics from the access control system and outputting the statistics to a user of the mobile user device, the statistics being based on a number of times the access to the at least one waste container of the waste collection point has been requested by the mobile user device for a predefined period of time.

14. The method of claim 13, wherein, if each of the waste containers of the waste collection point comprises a sensor for sensing a presence of infeed waste in the waste containers, the statistics is additionally based on sensing signals from the sensor of each of the waste containers of the waste collection point.

15. A combination of a mobile user device according to any of claims 1 to 7 and an access control system for controlling access to a waste collection point, wherein the waste collection point comprises waste containers and hatches connected to the waste containers, and wherein the access control system comprises:
a memory unit storing processor-executable instructions and a database; and
a processing unit coupled to the memory unit,
wherein the database comprises user IDs that are granted permanent or temporary access rights to the at least one waste container of the waste collection point; and
wherein the processing unit is configured, when executing the processor-executable instructions, to:
- receive at least one access request from the mobile user device the at least one access request comprising a user ID associated with the mobile user device and an indication of at least one waste container to be accessed among the waste containers of the waste collection point,
- determine that the user ID is present in the database and is granted the permanent or temporary access rights to the at least one hatch connected to the at least one waste container to be accessed, and
- send a control signal to the waste collection point, the control signal instructing the waste collection point to unlock or open the at least one hatch connected to the at least one waste container to be accessed.

## Patentansprüche

1. Mobiles Endgerät zum Anfordern eines Zugangs zu einem Abfallsammelpunkt, wobei der Abfallsammelpunkt Abfallbehälter und mit den Abfallbehältern verbundene Klappen umfasst, und wobei das mobile Endgerät umfasst:
eine Speichereinheit zum Speichern von prozessorausführbaren Befehlen und einer Benutzer Identifikation (ID), wobei der Benutzer ID permanente oder temporäre Zugangsrechte für die mit den Behältern des Abfallsammelpunkts verbundenen Klappen gewährt sind;
eine mit der Speichereinheit gekoppelte Verarbeitungseinheit; und
einen Touchscreen mit einem darauf bereitgestellten Satz von Schaltflächen, wobei der Satz von Schaltflächen verschiedenen Abfallarten entspricht,
wobei die Verarbeitungseinheit konfiguriert ist, bei Ausführung der prozessorausführbaren Befehle:
(a) eine Benutzereingabe durch die den verschiedenen Abfallarten entsprechenden Schaltflächen zu empfangen, wobei die Benutzereingabe eine Angabe von mindestens einem Abfallbehälter umfasst, auf den unter den Abfallbehältern des Abfallsammelpunkts zugegriffen werden soll;
(b) zu erkennen, dass sich das mobile Endgerät in einer Umgebung des Abfallsammelpunkts befindet; und
(c) mindestens eine Zugangsanfrage an ein Zugangskontrollsystem zu senden, um die mindestens eine mit dem mindestens einen Abfallbehälter, auf den zugegriffen werden soll, verbundene Klappe zu entriegeln oder zu öffnen, wobei die mindestens eine Zugangsanfrage die Benutzer ID und die Angabe des mindestens einen Abfallbehälters, auf den zugegriffen werden soll, umfasst.

2. Mobiles Endgerät nach Anspruch 1, wobei die Angabe des mindestens einen Abfallbehälter, auf den zugegriffen werden soll, umfasst:
- mindestens eine Abfallart, oder
- mindestens eine ID des mindestens einen Abfallbehälters, auf den zugegriffen werden soll.

3. Mobiles Endgerät nach einem der Ansprüche 1 bis 2, wobei die Verarbeitungseinheit konfiguriert ist, den Schritt (b) unter Verwendung von mindestens einem der folgenden auszuführen:
- Signalen eines globalen Positionsbestimmungssystems (GPS);
- von einer Funkbake des Abfallsammelpunkts ausgestrahlten drahtlosen Kurzstecken Signalen;
- einem an dem Abfallsammelpunkt bereitgestellten QR-Code; und
- einem an dem Abfallsammelpunkt bereitgestelltem NFC-Tag.

4. Mobiles Endgerät nach einem der Ansprüche 1 bis 3, wobei die Verarbeitungseinheit konfiguriert ist, den Schritt (c) unter Verwendung von drahtloser Kurzstecken Kommunikation und/oder über das Internet durchzuführen.

5. Mobiles Endgerät nach einem der Ansprüche 1 bis 4, wobei die Verarbeitungseinheit ferner konfiguriert ist, vor dem Schritt (c) die mindestens eine Zugangsanfrage mit einem kryptographischen Protokoll zu verschlüsseln.

6. Mobiles Endgerät nach einem der Ansprüche 1 bis 5, wobei die Verarbeitungseinheit ferner konfiguriert ist, Statistiken von dem Zugangskontrollsystem zu empfangen und die Statistiken an einen Benutzer des mobilen Endgeräts auszugeben, wobei die Statistiken auf einer Anzahl von Zugriffen auf den mindestens einen Abfallbehälter des Abfallsammelpunkts basieren, die vom mobilen Endgerät für einen vordefinierten Zeitraums angefordert wurden.

7. Mobiles Endgerät nach einem der Ansprüche 6, wobei, falls jeder der Abfallbehälter von dem Abfallsammelpunkts einen Sensor zum Erfassen eines Vorhandenseins von eingeführtem Müll in den Abfallbehälter umfasst, die Statistiken zusätzlich auf Erfassungssignalen von den Sensoren von jedem der Abfallbehälter des Abfallsammelpunkts basieren.

8. Verfahren zum Anfordern eines Zugangs zu einem Abfallsammelpunkt, wobei der Abfallsammelpunkt Abfallbehälter und mit den Abfallbehältern verbundene Klappen umfasst, und wobei Methode umfasst:
(a) Erhalten einer Benutzereingabe durch Betätigen von verschiedenen Abfallarten entsprechenden Schaltflächen eines Touchscreens in einem mobilen Endgerät, wobei das mobile Endgerät den Touchscreen mit einem darauf bereitgestellten Satz von Schaltflächen umfasst, wobei der Satz von Schaltflächen verschiedenen Abfallarten entspricht, die Benutzereingabe eine Angabe von mindestens einem Abfallbehälter umfasst, auf den unter den Abfallbehältern des Abfallsammelpunkts zugegriffen werden soll;
(b) Erkennen, dass sich das mobile Endgerät in einer Umgebung des Abfallsammelpunkts befindet; und
(c) Senden von mindestens einer Zugangsanfrage von dem mobilen Endgerät an ein Zugangskontrollsystem, um die mindestens eine mit dem mindestens einen Abfallbehälter, auf den zugegriffen werden soll, verbundene Klappe zu entriegeln oder zu öffnen, wobei die mindestens eine Zugangsanfrage die dem mobilen Endgerät zugewiesene Benutzer ID und die Angabe des mindestens einen Abfallbehälters, auf den zugegriffen werden soll, umfasst, der Benutzer ID permanente oder temporäre Zugangsrechte für die mit den Behältern des Abfallsammelpunkts verbundenen Klappen gewährt sind.

9. Verfahren nach Anspruch 8, wobei die Angabe des mindestens einen Abfallbehälters, auf den zugegriffen werden soll, umfasst:
- mindestens eine Abfallart, oder
- mindestens eine ID des mindestens einem Abfallbehälters, auf den zugegriffen werden soll.

10. Verfahren nach einem der Ansprüche 8 bis 9, wobei Schritt (b) ausgeführt wird unter Verwendung von mindestens einem der folgenden:
- Signalen eines globalen Positionsbestimmungssystems (GPS);
- von einer Funkbake des Abfallsammelpunkts ausgestrahlten drahtlosen Kurzstecken
Signalen;
- einem an dem Abfallsammelpunkt bereitgestellten QR-Code; und
- einem an dem Abfallsammelpunkt bereitgestellten NFC-Tag.

11. Verfahren nach einem der Ansprüche 8 bis 10, wobei Schritt (b) ausgeführt wird unter Verwendung von drahtloser Kurzstecken Kommunikation und/oder über das Internet.

12. Verfahren nach einem der Ansprüche 8 bis 11, ferner umfassend, vor dem Schritt (c), das Verschlüsseln der mindestens einen Zugangsanfrage mit einem kryptographischen Protokoll.

13. Verfahren nach einem der Ansprüche 8 bis 12, ferner umfassend, in dem mobilen Endgerät, Empfangen von Statistiken von dem Zugangskontrollsystem und die Statistiken an einen Benutzer des mobilen Endgeräts auszugeben, wobei die Statistiken auf einer Anzahl von Zugriffen auf den mindestens einen Abfallbehälter des Abfallsammelpunkts basieren, die vom mobilen Endgerät für einen vordefinierten Zeitraums angefordert wurden.

14. Verfahren nach Ansprüche 13, wobei, falls jeder der Abfallbehälter von dem Abfallsammelpunkts einen Sensor zum Erfassen eines Vorhandenseins von eingeführtem Müll in den Abfallbehälter umfasst, die Statistiken zusätzlich auf Erfassungssignalen von den Sensoren von jedem der Abfallbehälter des Abfallsammelpunkts basieren.

15. Kombination aus einem mobilen Endgerät nach einem der Ansprüche 1 bis 7 und einem Zugangskontrollsystem zur Kontrolle eines Zugangs zu einem Abfallsammelpunkt, wobei der Abfallsammelpunkt Abfallbehälter und mit den Abfallbehältern verbundene Klappen umfasst, und wobei das Zugangskontrollsystem umfasst:
eine Speichereinheit zum Speichern von prozessorausführbaren Befehlen und einer Datenbank; und
eine mit der Speichereinheit gekoppelte Verarbeitungseinheit, wobei die Datenbank Benutzer IDs mit permanent oder temporär gewährten Zugangsrechten für den mindestens einen Abfallbehälter des Abfallsammelpunkts umfasst; und
wobei die Verarbeitungseinheit konfiguriert ist, bei Ausführung der prozessorausführbaren Befehle, zum;
- Empfangen von mindestens einer Zugangsanfrage von dem mobilen Benutzergerät, wobei die mindestens eine Zugangsanfrage eine dem mobilen Endgerät zugewiesene Benutzer ID und eine Angabe von mindestens einem Abfallbehälter, auf den unter den Abfallbehältern des Abfallsammelpunkts zugegriffen werden soll, umfasst,
- Feststellen, dass die Benutzer ID in der Datenbank vorhanden ist und dass ihr permanente oder temporäre Zugangsrechte für mindestens eine mit mindestens einen Abfallbehälter, auf den zugegriffen werden soll, verbundene Klappe gewährt sind, und
- Senden eines Kontrollsignals zu dem Abfallsammelpunkt, wobei das Kontrollsignal den Abfallsammelpunkt anweist, die mindestens eine mit dem mindestens einen Abfallbehälter, auf den zugegriffen werden soll, verbundene Klappe zu entriegeln oder zu öffnen.

## Revendications

1. Dispositif utilisateur mobile pour demander l'accès à un point de collecte de déchets, dans lequel le point de collecte de déchets comprend des récipients à déchets et des trappes reliées aux récipients à déchets, et dans lequel le dispositif utilisateur mobile comprend :
une unité de mémoire stockant des instructions exécutables par processeur et un identifiant (ID) d'utilisateur,
l'ID d'utilisateur se voyant accorder des droits d'accès permanents ou temporaires aux trappes reliées aux récipients à déchets du point de collecte de déchets ;
une unité de traitement couplée à l'unité de mémoire ; et
un écran tactile présentant un ensemble de boutons prévus sur celui-ci, dans lequel l'ensemble de boutons correspond à différents types de déchets,
dans lequel l'unité de traitement est configurée, lors de l'exécution des instructions exécutables par processeur, pour :
(a) recevoir une entrée d'utilisateur via les boutons de l'écran tactile correspondant à différents types de déchets, l'entrée d'utilisateur comprenant une indication d'au moins un récipient à déchets auquel accéder parmi les récipients à déchets du point de collecte de déchets ;
(b) détecter lorsque le dispositif utilisateur mobile se situe dans un voisinage du point de collecte de déchets ;
et
(c) envoyer au moins une demande d'accès à un système de commande d'accès pour déverrouiller ou ouvrir l'au moins une trappe reliée à l'au moins un récipient à déchets auquel accéder,
l'au moins une demande d'accès comprenant l'ID d'utilisateur et l'indication de l'au moins un récipient à déchets auquel accéder.

2. Dispositif utilisateur mobile selon la revendication 1, dans lequel l'indication de l'au moins un récipient à déchets auquel accéder comprend :
- au moins un type de déchets, ou
- au moins un ID de l'au moins un récipient à déchets auquel accéder.

3. Dispositif utilisateur mobile selon l'une quelconque des revendications 1 à 2, dans lequel l'unité de traitement est configurée pour effectuer l'opération (b) en utilisant au moins un des éléments suivants :
- des signaux du système de positionnement global (GPS) ;
- des signaux sans fil à courte portée diffusés par une balise du point de collecte de déchets ;
- un code QR prévu dans le point de collecte de déchets ; et
- une étiquette NFC prévue dans le point de collecte de déchets.

4. Dispositif utilisateur mobile selon l'une quelconque des revendications 1 à 3, dans lequel l'unité de traitement est configurée pour effectuer l'opération (c) en utilisant des communications sans fil à courte portée et/ou via Internet.

5. Dispositif utilisateur mobile selon l'une quelconque des revendications 1 à 4, dans lequel l'unité de traitement est en outre configurée, avant l'opération (c), pour chiffrer l'au moins une demande d'accès avec un protocole cryptographique.

6. Dispositif utilisateur mobile selon l'une quelconque des revendications 1 à 5, dans lequel l'unité de traitement est en outre configurée pour recevoir des statistiques issues du système de commande d'accès et délivrer en sortie les statistiques à un utilisateur du dispositif utilisateur mobile, les statistiques étant basées sur un nombre de fois où l'accès à l'au moins un récipient à déchets du point de collecte de déchets a été demandé par le dispositif utilisateur mobile pendant une période de temps prédéfinie.

7. Dispositif utilisateur mobile selon la revendication 6, dans lequel, si chacun des récipients à déchets du point de collecte de déchets comprend un capteur pour détecter une présence de déchets en amenée dans les récipients à déchets, les statistiques sont en outre basées sur des signaux de détection provenant du capteur de chacun des récipients à déchets du point de collecte de déchets.

8. Procédé pour demander l'accès à un point de collecte de déchets, dans lequel le point de collecte de déchets comprend des récipients à déchets et des trappes reliées aux récipients à déchets, et dans lequel le procédé comprend :
(a) recevoir une entrée d'utilisateur en appuyant sur des boutons d'un écran tactile correspondant à différents types de déchets dans un dispositif utilisateur mobile, dans lequel le dispositif utilisateur mobile comprend l'écran tactile présentant un ensemble de boutons prévus sur celui-ci, dans lequel l'ensemble de boutons correspond à différents types de déchets, l'entrée d'utilisateur comprenant une indication d'au moins un récipient à déchets auquel accéder parmi les récipients à déchets du point de collecte de déchets ;
(b) détecter lorsque le dispositif utilisateur mobile se situe dans un voisinage du point de collecte de déchets ; et
(c) envoyer au moins une demande d'accès depuis le dispositif utilisateur mobile à un système de commande d'accès pour déverrouiller ou ouvrir l'au moins une trappe reliée à l'au moins un récipient à déchets auquel accéder, l'au moins une demande d'accès comprenant un ID d'utilisateur associé au dispositif utilisateur mobile et l'indication de l'au moins un récipient auquel accéder, l'ID d'utilisateur se voyant accorder des droits d'accès permanents ou temporaires à l'au moins une trappe reliée à l'au moins un récipient à déchets du point de collecte de déchets.

9. Procédé selon la revendication 8, dans lequel l'indication de l'au moins un récipient à déchets auquel accéder comprend :
- au moins un type de déchets, ou
- au moins un ID de l'au moins un récipient à déchets auquel accéder.

10. Procédé selon l'une quelconque des revendications 8 à 9, dans lequel l'étape (b) est effectuée en utilisant au moins un des éléments suivants :
- des signaux du système de positionnement global (GPS) ;
- des signaux sans fil à courte portée diffusés par une balise du point de collecte de déchets ;
- un code QR prévu dans le point de collecte de déchets ; et
- une étiquette NFC prévue dans le point de collecte de déchets.

11. Procédé selon l'une quelconque des revendications 8 à 10, dans lequel l'étape (c) est effectuée en utilisant des communications sans fil à courte portée et/ou via Internet.

12. Procédé selon l'une quelconque des revendications 8 à 11, comprenant en outre, avant l'étape (c), le fait de chiffrer l'au moins une demande d'accès avec un protocole cryptographique.

13. Procédé selon l'une quelconque des revendications 8 à 12, comprend en outre une réception, dans le dispositif utilisateur mobile, de statistiques issues du système de commande d'accès et le fait de délivrer en sortie les statistiques à un utilisateur du dispositif utilisateur mobile, les statistiques étant basées sur un nombre de fois où l'accès à l'au moins un récipient à déchets du point de collecte de déchets a été demandé par le dispositif utilisateur mobile pendant une période de temps prédéfinie.

14. Procédé selon la revendication 13, dans lequel, si chacun des récipients à déchets du point de collecte de déchets comprend un capteur pour détecter une présence de déchets en amenée dans les récipients à déchets, les statistiques sont en outre basées sur des signaux de détection provenant du capteur de chacun des récipients à déchets du point de collecte de déchets.

15. Combinaison d'un dispositif utilisateur mobile selon l'une quelconque des revendications 1 à 7 et d'un système de commande d'accès pour commander l'accès à un point de collecte de déchets, dans laquelle le point de collecte de déchets comprend des récipients à déchets et des trappes reliées aux récipients à déchets, et dans laquelle le système de commande d'accès comprend :
une unité de mémoire stockant des instructions exécutables par processeur et une base de données ; et
une unité de traitement couplée à l'unité de mémoire,
dans laquelle la base de données comprend des ID d'utilisateur auxquels sont accordés des droits d'accès permanents ou temporaires à l'au moins un récipient à déchets du point de collecte de déchets ; et
dans laquelle l'unité de traitement est configurée, lors de l'exécution des instructions exécutables par processeur, pour :
- recevoir au moins une demande d'accès du dispositif utilisateur mobile, l'au moins une demande d'accès comprenant un ID d'utilisateur associé au dispositif utilisateur mobile et une indication d'au moins un récipient à déchets auquel accéder parmi les récipients à déchets du point de collecte de déchets,
- déterminer que l'ID d'utilisateur est présent dans la base de données et se voit accorder les droits d'accès permanents ou temporaires à l'au moins une trappe reliée à l'au moins un récipient à déchets auquel accéder, et
- envoyer un signal de commande au point de collecte de déchets, le signal de commande ordonnant au point de collecte de déchets de déverrouiller ou ouvrir l'au moins une trappe reliée à l'au moins un récipient à déchets auquel accéder.
